# EUROPÄISCHE PATENTSCHRIFT

(11) **EP 1 682 767 B1**
(45) Veröffentlichungstag und Bekanntmachung des Hinweises auf die Patenterteilung: **19.11.2008**
(21) Anmeldenummer: 04765242.5
(22) Anmeldetag: 15.09.2004
(51) Int. Cl.: F02M 25/07, F28F 21/08, F28D 7/16

(54) **WÄRMETAUSCHER**
HEAT EXCHANGER
ECHANGEUR DE CHALEUR

(30) Priorität: 29.10.2003 DE 20316688 U
(43) Veröffentlichungstag der Anmeldung: 26.07.2006
(60) Teilanmeldung: 08016038.5
(73) Patentinhaber: Behr GmbH & Co. KG, 70469 Stuttgart (DE)
(72) Erfinder: DIGELE, Jörg, 71691 Freiberg (DE)
(74) Vertreter: Mantel, Berthold Friedrich
(86) Internationale Anmeldenummer: PCT/EP2004/010333
(87) Internationale Veröffentlichungsnummer: WO 2005/052346

(56) Entgegenhaltungen:
- DE-A- 19 749 620
- US-A- 4 685 430
- US-B1- 6 311 678
- PATENT ABSTRACTS OF JAPAN Bd. 1999, Nr. 04, 30. April 1999 (1999-04-30) -& JP 11 013554 A (CALSONIC CORP), 19. Januar 1999 (1999-01-19)

## Beschreibung

Die Erfindung betrifft einen Wärmetauscher, insbesondere Abgaswärmetauscher eines Verbrennungsmotors eines Kraftfahrzeuges, nach dem Oberbegriff des Patentanspruchs 1.

Ein solcher Wärmetauscher ist aus EP 0 930 429 A2 und US 6,311,678 bekannt. Die Erfindung beschäftigt sich mit dem Problem, einen gattungsgemäßen Wärmetauscher kostengünstig und funktionssicher herstellen zu können.

Eine grundsätzliche Lösung dieses Problems zeigt ein gattungsgemäßer Wärmetauscher mit den kennzeichnenden Merkmalen des Patentanspruchs 1 auf.

Zweckmäßige und vorteilhafte Ausgestaltungen der Erfindung sind Gegenstand der Unteransprüche.

Die Erfindung beruht auf dem allgemeinen Gedanken, einen mit einem ersten heißen Medium beaufschlagten Wärmetauscher ausschließlich dort aus einem gegenüber den heißen Temperaturen wärmebeständigen teuren Material auszubilden, wo dies unbedingt notwendig ist und im übrigen einen möglichst großen Bereich zu schaffen, der von teure Kontaktmaterialien erfordernden heißen Temperaturen entkoppelt ist, um diesen entkoppelten Bereich aus einem preisgünstigeren Material herstellen zu können. Bei dem gattungsgemäßen Wärmetauscher wird dies dadurch erreicht, daß der axial innenliegende Bereich des Wärmetauschers, der von dem ersten heißen Gas durchströmt wird, wärmeentkoppelt mit einem äußeren Mantelgehäuse, in den der axial innere Teil einschiebbar ist, verbunden wird. In diesem Fall kann der Außenmantel insbesondere aus einem gegenüber Metall preisgünstigeren Kunststoff hergestellt werden. Bei einer Herstellung des Gehäusemantels aus Kunststoff können an diesen auf einfache Weise Halterungen und sonstige Anbauteile angeformt sein.

Im Inneren des Wärmetauschers können Kunststoffschikanen durch Einschieben form- oder flächenschlüssig zwischen dem Gehäusemantel und dem axial innerhalb des Gehäusemantels liegenden innenbereich fixiert werden.

Die an einer Stirnseite des Wärmetauschers erforderliche axial feste und im übrigen dichte Verbindung zwischen einem der Rohrböden und dem Gehäusemantel wird durch ein Bördeln des Rohrbodens um einen Ringsteg an dem Gehäusemantel erreicht. Hierfür können an sich für solche Zwecke bekannte Bördeltechniken eingesetzt werden.

Ein nachfolgend noch näher beschriebenes, vorteilhaftes Ausführungsbeispiel der Erfindung ist in der Zeichnung dargestellt.

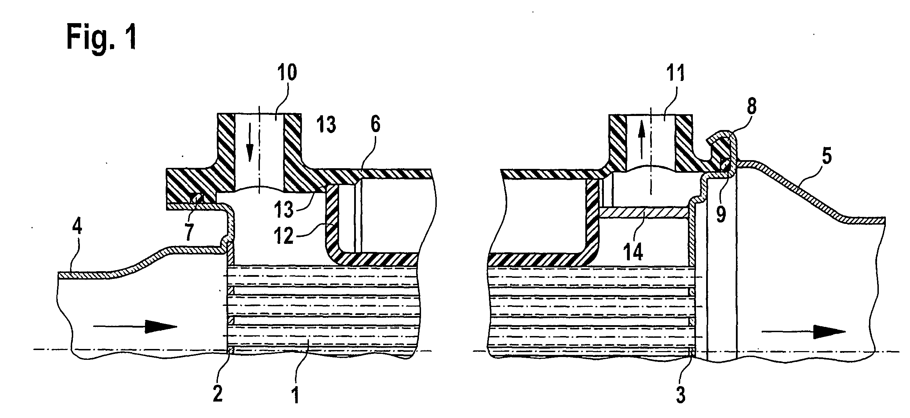

In dieser zeigt
- **Fig. 1**: einen Längsschnitt durch einen Abgaswärmetauscher eines Verbrennungsmotors eines Kraftfahrzeuges.

Als Durchströmungsbereich für heißes Abgas eines Verbrennungsmotors besitzt der Wärmetauscher ein Rohrbündel aus einzelnen Rohren 1, die von heißem Abgas axial innen in Richtung der in der Zeichnung angegebenen Strömungspfeile durchströmt werden. Die einzelnen Rohre 1 des Rohrbündels sind an ihren stirnseitigen Enden in Rohr-Böden 2 und 3 dicht und fest gefaßt. Fest mit den Rohr-Böden 2 und 3 verbunden sind eintrittsseitig des Wärmetauschers ein Abgas-Zufuhrstutzen 4 und austrittsseitig ein Abgasabführstutzen 5.

Von den Rohr-Böden ist der zweite Boden 2 in einem axial hohlen Gehäusemantel 6 axial verschiebbar dicht gelagert. Die dichte Lagerung gewährt ein radial zwischen diesem zweiten Rohr-Boden 2 und dem Gehäusemantel 6 vorgesehener erster Dichtring 7.

Austrittsseitig des Wärmetauschers ist der dortige erste Rohr-Boden 3 axial fest mit dem Gehäusemantel 6 verbunden. Diese axial fest und dichte Verbindung besteht aus einer Bördelverbindung, bei der der erste Rohr-Boden 3 um einen Ringsteg 8 des Gehäusemantels in einer für solche Zwecke bekannten Weise gebördelt ist. Für die dichte Verbindung sorgt zwischen dem Ringsteg 8 des Gehäusemantels 6 und dem ersten Rohr-Boden 3 eine zweite Ringdichtung 9.

Der Gehäusemantel 6 besitzt an seinen stirnseitigen Umfangsbereichen einen Kühlmittel-Einlaßstutzen 10 sowie einen Auslaßstutzen 11, wobei diese beiden Stutzen an gegenüberliegenden Enden angebracht sind und entsprechend den in der Zeichnung eingetragenen Strömungspfeilen, von Kühlmittel durchströmt werden.

Innerhalb des Gehäusemantels 6 ist in dem äußeren Ringbereich zwischen dem Gehäusemantel 6 und dem von den einzelnen Rohren 1 gemeinsam gebildeten Außenumfang eine Schikane 12 eingesetzt, durch die eine gleichmäßige Durchströmung der Zwischenräume zwischen den einzelnen Rohren 1 in axialer Richtung gewährleistet ist. Die Schikane 12, die stirnseitig jeweils aus einem Ringsteg und einem dazwischen liegenden umfangsmäßig geschlossenen Rohrabschnitt besteht, ist lediglich zwischen einer Ringstufe 13 des Gehäusemantels 6 und dem ersten Rohr-Boden 3 eingeklemmt. Zur axialen Abstützung gegenüber dem ersten Rohr-Boden 3 sind an die Schikane 12 im Bereich des Auslaßstutzens 11 über den Umfang verteilt mehrere axiale Stützstreben 14 vorgesehen.

Während die einzelnen Rohr 1 sowie die Rohr-Böden 2 und 3 aus einem für die Abgastemperaturen wärmebeständigen Metall bestehen, sind der Gehäusemantel 6 und die Schikane 12 aus einem weniger hochtemperaturbeständigen Kunststoff ausgebildet.

Bei einem Abgaswärmetauscher kann das Abgas beispielsweise mit einer Temperatur von etwa 700° C in die einzelnen Rohre 1 eintreten. In dem von dem Kühlmittel durchströmten, an den Gehäusemantel 6 und die Schikane 12 angrenzenden Bereich herrscht eine Temperatur von etwa 100° C. Bei derartigen Temperaturverhältnissen kann an dem eintrittsseitig des Wärmetauschers liegenden zweiten Rohr-Boden 2 in dem den Gehäusemantel 6 kontaktierenden Bereich eine Temperaturabsenkung bis auf etwa 200° C erreicht werden. Bei einer solchen Temperatur sind bereits wirtschaftlich äußerst günstig herstellbare Kunststoffe für den Gehäusemantel 6 einsetzbar.

Der gezeichnete Wärmetauscher kann wie folgt hergestellt werden. In einen aus Kunststoff geformten, einen konisch ausgebildeten Gehäusemantel 6 wird das mit den Rohr-Böden 2, 3 einschließlich der Zuführ- und Abführstutzen 4 bzw. 5 verbundene Rohrbündel aus Einzelrohren 1 einfach eingeschoben und zwar bei dem gezeigten Beispiel von rechts nach links. Die Zuführ- bzw. Abführstutzen 4, 5 können selbstverständlich auch erst nachträglich an die Rohr-Böden 2, 3 angeschweißt werden. Beim Einfügen des Rohrbündels aus einzelnen Rohren 1 in den Gehäusemantel 6 kann die Schikane 12 mit eingefügt werden. Das in den Gehäusemantel 6 eingefügte Rohrbündel wird schließlich an seinem ersten Rohr-Boden 3 in der bereits vorstehend beschriebenen Weise mit einem stirnseitigen Ringsteg 8 des Gehäusemantels 6 fest und unter Einsatz der zweiten Dichtung 9 dicht verbunden.

Durch die "Loslagerung" des Rohrbündels über den zweiten Rohr-Boden 2 innerhalb des Gehäusemantels 6 können unterschiedliche Wärmedehnungen und Schwingungen zwischen dem Rohrbündel und dem Gehäusemantel 6 eine notwendige, hohe Dauerfestigkeit des Wärmetauschers nicht gefährden. Außer der rationellen Herstellbarkeit des erfindungsgemäßen Wärmetauschers ist dies ein wesentlicher, durch die Erfindung erreichter Vorteil.

### Bezugszeichenliste

- 1: einzelne Rohre
- 2: zweiter Rohr-Boden
- 3: erster Rohr-Boden
- 4: Zuführstutzen
- 5: Abführstutzen
- 6: Gehäusemantel
- 7: erster Dichtring
- 8: Ringsteg
- 9: zweite Ringdichtung
- 10: Einlaßkanal
- 11: Auslaßkanal
- 12: Schikane
- 13: Ringstufe
- 14: Stützstreben

## Patentansprüche

1. Wärmetauscher, insbesondere Abgaswärmetauscher eines Verbrennungsmotors eines Kraftfahrzeuges, mit einem beidseitigen offenen Gehäusemantel (6), bei dem
- in dem Gehäusemantel (6) ein Bündel aus einer Vielzahl einzelner voneinander beabstandeter Rohre (1) eingesetzt ist,
- die einzelnen Rohre (1) des Rohrbündels in stirnseitigen Rohr-Böden (2, 3) fest und dicht gefasst sind,
- die Rohr-Böden (2, 3) die stirnseitigen Verschlüsse des Gehäusemantels (6) bilden,
- ein erster der beiden Rohrböden (3) fest mit dem Gehäusemantel (6) dicht verbunden ist,
- der zweite Rohr-Boden (2) axial verschiebbar dicht in dem Gehäusemantel (6) gelagert ist,
- die Rohre (1) axial innen für eine Durchströmung durch ein erstes heißes Medium ausgelegt sind,
- die Rohre (1) axial außen in einem von dem Gehäusemantel (6) gebildeten Raum liegen, der für eine axiale Durchströmung dieses Gehäusemantels (6) durch ein zweites, gegenüber dem ersten Medium kühleres Medium ausgelegt ist,
- die einzelnen Rohre (1) und zumindest der an der heißen Eintrittsseite des Wärmetauschers liegende zweite Rohr-Boden (2) aus hitzebeständigem Metall bestehen,
- der Gehäusemantel (6) aus Kunststoff besteht,
- der an der Eintrittsseite für das erste heiße Medium liegende zweite Rohr-Boden (2) vor seiner Anlage an dem Gehäusemantel (6) einen dem zweiten Medium innerhalb des Gehäusemantels (6) direkt ausgesetzten Zwischenbereich auf,
**dadurch gekennzeichnet, dass**
die feste Verbindung zwischen einem der Rohr-Böden (2, 3) und dem Gehäusemantel (6) eine Bördelverbindung ist, bei der einer der beiden Rohr-Böden (2 bzw. 3) um einen Ringsteg (8), des Gehäusemantels (6) gebördelt ist.

2. Wärmetauscher nach Anspruch 1,
**dadurch gekennzeichnet,**
**dass** die Wärmebeständigkeit des Materials des Gehäusemantels (6) um mindestens 100°C, insbesondere um mindestens 300°C unterhalb einer Eintrittstemperatur des ersten Mediums in den Wärmetauscher liegt.

3. Wärmetauscher nach einem der vorhergehenden Ansprüche,
**dadurch gekennzeichnet,**
**dass** innerhalb des radial zwischen dem Rohrbündel und dem Gehäusemantel (6) liegenden Raumes mindestens eine Strömungsschikane (12) aus Kunststoff eingesetzt ist.

4. Wärmetauscher nach einem der vorhergehenden Ansprüche,
**dadurch gekennzeichnet,**
**dass** die Kunststoffschikane (12) axial zwischen einem der Rohr-Böden (2, 1) einerseits und dem anderen Rohr-Boden (2 bzw. 3) oder dem Gehäusemantel (6) andererseits ausschließlich flächen- bzw. formschlüssig fixiert ist.

## Claims

1. Heat exchanger, in particular an exhaust gas heat exchanger of an internal combustion engine of a motor vehicle, comprising a housing jacket (6) which is open at both ends, in which
- a bundle composed of a plurality of individual tubes (1) spaced apart from one another is inserted into the housing jacket (6),
- the individual tubes (1) of the tube bundle are held firmly, forming a seal, in tube plates (2, 3) at the ends,
- the tube plates (2, 3) form the closures at the ends of the housing jacket (6),
- a first of the two tube plates (3) is connected to the housing jacket (6) firmly, forming a seal,
- the second tube plate (2) is fitted in the jacket housing (6) in an axially displaceable and leakproof manner,
- the tubes (1) are designed axially on the inside to allow a first hot medium to flow through them,
- the tubes (1) are located axially on the outside in a space formed by the housing jacket (6) and designed to allow a second medium, which is cooler than the first medium, to flow axially through the housing jacket (6),
- the individual tubes (1) and at least the second tube plate (2) located on the hot inlet side of the heat exchanger are composed of heat-resistant metal,
- the housing jacket (6) consists of plastic,
- the second tube bottom (2) located on the inlet side for the first hot medium has, before it bears against the housing jacket (6), an intermediate area which is exposed directly to the second medium, **characterised in that** the fixed connection between one of the tube plats (2, 3) and the housing jacket (6) is a flange joint in which one of the two tube plates (2 or 3) is flanged around an annular web (8) of the housing jacket (6).

2. Heat exchanger according to Claim 1,
**characterised in that**
the heat resistance of the material of the housing jacket (6) is at least 100°C, in particular at least 300°C, below an inlet temperature of the first medium into the heat exchanger.

3. Heat exchanger according to either of the preceding claims,
**characterised in that**
at least one flow baffle (12) made of plastic is inserted within the space radially between the tube bundle and the housing jacket (6).

4. Heat exchanger according to any of the preceding claims,
**characterised in that**
the plastic baffle (12) is secured axially between on the one hand one of the tube plates (2, 1) and on the other hand the other tube plate (2 or 3) or the housing jacket (6), exclusively by areal or positively locking engagement.

## Revendications

1. Echangeur de chaleur, en particulier échangeur de chaleur de gaz d'échappement d'un moteur à combustion interne d'un véhicule automobile, comprenant une enveloppe de carter (6) ouverte des deux côtés, dans lequel
- un faisceau d'une multiplicité de différents tubes (1) espacés les uns des autres est introduit dans l'enveloppe de carter (6),
- les différents tubes (1) du faisceau de tubes sont montés de façon fixe et étanche dans des plateaux à tubes frontaux (2, 3),
- les plateaux à tubes (2, 3) forment les obturations frontales de l'enveloppe de carter (6),
- un premier des deux plateaux à tubes (3) est raccordé de façon fixe et étanche à l'enveloppe de carter (6),
- le deuxième plateau à tubes (2) est logé dans l'enveloppe de carter (6), en étant mobile axialement et étanche,
- les tubes (1) sont dimensionnés intérieurement, dans le sens axial, pour être traversés par un premier milieu chaud,
- les tubes (1) se trouvent, extérieurement dans le sens axial, dans un espace formé par l'enveloppe de carter (6), espace qui est conçu pour une traversée axiale de cette enveloppe de carter (6) par un deuxième milieu plus froid par rapport au premier milieu,
- les différents tubes (1) et au moins le deuxième plateau à tubes (2) se trouvant sur le côté d'entrée chaud de l'échangeur de chaleur sont fabriqués dans un métal résistant à la chaleur,
- l'enveloppe de carter (6) est en matière plastique,
- le deuxième plateau à tubes (2) se trouvant sur le côté d'entrée pour le premier milieu chaud présente, en amont de son montage sur l'enveloppe de carter (6), une zone intermédiaire exposée directement au deuxième milieu à l'intérieur de l'enveloppe de carter (6),
**caractérisé en ce que** le raccordement fixe entre les plateaux à tubes (2, 3) et l'enveloppe de carter (6) est un sertissage dans lequel l'un des deux plateaux à tubes (2 ou 3) est serti autour d'une nervure annulaire (8) de l'enveloppe de carter (6).

2. Echangeur de chaleur selon la revendication 1, **caractérisé en ce que** la résistance du matériau de l'enveloppe de carter (6), à la chaleur, est au moins de 100°C, en particulier au moins de 300°C inférieure à une température d'entrée du premier milieu dans l'échangeur de chaleur.

3. Echangeur de chaleur selon l'une ou l'autre des revendications précédentes, **caractérisé en ce qu'**au moins une chicane d'écoulement (12), en matière plastique, est introduite à l'intérieur de l'espace se trouvant, radialement, entre le faisceau de tubes et l'enveloppe de carter (6).

4. Echangeur de chaleur selon l'une quelconque des revendications précédentes, **caractérisé en ce que** la chicane (12) en matière plastique est fixée, de façon axiale, exclusivement par continuité de surface ou de forme, entre l'un des plateaux à tubes (2, 1), d'une part, et l'autre plateau à tubes (2 ou 3) ou l'enveloppe de carter (6), d'autre part.
